# EUROPEAN PATENT SPECIFICATION

(11) **EP 2 915 169 B1**
(45) Date of publication and mention of the grant of the patent: **19.06.2019**
(21) Application number: 13850954.2
(22) Date of filing: 09.10.2013
(51) Int. Cl.: G21F 9/32, C10J 3/00, C10J 3/54, F23G 5/027, C10J 3/46, C10J 3/48, C10J 3/52, C10J 3/72, C10K 1/02, C10K 1/10, C10L 3/00, F23J 15/02, F23J 15/06, F23G 7/00, G21F 9/00, G21F 9/02, G21F 9/30, G21F 9/34

(54) **METHOD FOR TREATING WASTE MATERIAL**
VERFAHREN ZUR BEHANDLUNG VON ABFALLMATERIAL
PROCÉDÉ DE TRAITEMENT DE DÉCHETS

(30) Priority: 31.10.2012 FI 20126130
(43) Date of publication of application: 09.09.2015
(73) Proprietor: Teknologian Tutkimuskeskus VTT OY, 02150 Espoo (FI)
(72) Inventor: KURKELA, Esa, FI-02044 Vtt (FI); NIEMINEN, Matti, FI-02044 Vtt (FI)
(74) Representative: Papula Oy
(86) International application number: PCT/FI2013/050977
(87) International publication number: WO 2014/068176

(56) References cited:
- EP-A1- 1 927 997
- WO-A2-01/27935
- JP-A- 2006 266 967
- US-A- 5 325 797
- US-A- 5 470 544
- US-A- 5 626 088
- US-A- 5 909 654
- US-A- 5 909 654
- US-A- 6 084 147
- US-B1- 6 293 209

## Description

### FIELD OF THE INVENTION

The invention relates to a method defined in the preamble of claim 1 for treating waste material including organic components and radioactive agents.

### BACKGROUND OF THE INVENTION

It is known from the prior art that radioactively contaminated waste is difficult to treat. Further, disposal of the radioactively contaminated waste is costly.

From WO 01/27935 is known a process for the treatment of radioactive graphite. From US 6293209 is known a process for treating a raw material containing aluminium or a similar metal. From US 5909654 is known a method and apparatus for the volume reduction and processing of solid organic waste, in particular ion exchange media.

### OBJECTIVE OF THE INVENTION

The objective of the invention is to disclose a new type method and apparatus for treating waste material including organic components and radioactive agents. Further, the objective of the invention is to disclose a method and apparatus for treating contaminated waste material into environmentally safe form. Further, the objective of the invention is to decrease amount of waste material. Further, the objective of the invention is to produce a new gaseous product.

### SUMMARY OF THE INVENTION

The method according to the invention is characterized by what has been presented in the claims.

The invention is based on a method for treating waste material including organic components and radioactive agents, wherein the waste material is treated by heat to form a gaseous material, the gaseous material is cooled and the radioactive agents are removed from the gaseous material. According to the invention, the method comprises steps in order to form a treated gaseous material: the waste material including organic components and radioactive agents which are low-level and/or medium-level radioactive agents is gasified at temperature between 600 - 950 °C in a fluidized bed reactor and is gasified by air so that air ratio is below 1 to form a gaseous material; the waste material including organic components and radioactive agents is selected from the group containing resins, such as resins from nuclear powerplant, clothes, such as industrial protective clothing and protective clothing, contaminated wood, contaminated vegetable matter, such as corn, straw and hay; the gaseous material is cooled by water quenching so that temperature is between 300 - 500 °C after the cooling; and solid fraction including radioactive agents is removed from the gaseous material in a gas cleaning step by filtering at temperatures between 300 - 500 °C; and the treated gaseous material is burnt and/or is post-treated by a gas scrubbing after the removing of the solid fraction including radioactive agents.

Further, there is described an apparatus for treating waste material including organic components and radioactive agents, the apparatus for forming a treated gaseous material comprises: a fluidized bed reactor in which the waste material including organic components and radioactive agents which are low-level and/or medium-level radioactive agents is gasified at temperature between 600 - 950 °C and is gasified by air so that air ratio is below 1 to form a gaseous material; a cooling step comprising at least one water quenching step in which the gaseous material is cooled so that temperature is between 300 - 500 °C after the cooling; and a gas cleaning device in which solid fraction including radioactive agents is removed from the gaseous material.

The product gas contains treated gaseous material which has been formed from waste material including organic components and radioactive agents which are low-level and/or medium-level radioactive agents so that the waste material including organic components and radioactive agents has been gasified at temperature between 600 - 950 °C in a fluidized bed reactor and has been gasified by air so that air ratio is below 1 to form a gaseous material, the gaseous material has been cooled by water quenching so that temperature is between 300 - 500 °C after the cooling, and solid fraction including radioactive agents has been removed from the gaseous material in a gas cleaning step.

Preferably, the gaseous material is combustible. In this context, radioactive agents are low-level and/or medium-level.

The waste material including organic components and radioactive agents is selected from the group containing resins, such as resins from nuclear power plant, clothes, such as industrial protective clothing and protective clothing, contaminated wood, contaminated vegetable matter such as corn, straw and hay.

The reactor is a fluidized bed reactor, bubbling or circulating fluidized bed reactor or the like. In the fluidized bed reactor hot spots don't form in the reactor bed. Sand, aluminium oxide or other suitable bed material may be used as the bed material.

In one embodiment radioactive agents and other metals may partly vaporize during the gasification. When the gaseous material is cooled so the radioactive agents and other metals which have vaporized during the gasification are condensed and changed back solid form.

It is important that temperature can be controlled in the gasification. It is important for the invention that organic and radioactive agents can be removed. In the gasification the radioactive agents and other metals may partly vaporize. However, because low temperature is used in the gasification so vaporization of metals can be minimized. In the cooling the radioactive agents and other metals are condensed and changed back solid form.

In one embodiment, the the waste material including organic components and radioactive agents is gasified at temperature between 600 - 900 °C in a reactor to form a gaseous material. In one embodiment, the the waste material is gasified at temperature between 700 - 950 °C, and in one embodiment between 700 - 900 °C. In one embodiment, the the waste material is gasified at temperature between 750 - 950 °C, and in one embodiment between 750 - 900 °C.

The waste material including organic components and radioactive agents is gasified by air. The air ratio is below 1, preferably below 0.7, more prefrable below 0.5 and most preferable below 0.4.

In one embodiment, the waste material including organic components and radioactive agents may be dewatered before the gasification. In one embodiment water is removed mechanically from the waste material including organic components and radioactive agents. In one embodiment the the waste material including organic components and radioactive agents is dried by the drying device.

In one embodiment the other organic material is added into the waste material including organic components and radioactive agents before the gasification. The other organic material may be selected from the group containing oil, plastic, polymers or the like. It is important that ash content of the other organic material is low.

In one embodiment, the gaseous material is cooled so that temperature is between 350 - 450 °C after the cooling.

The gaseous material is cooled by water quenching. The apparatus comprises water quenching step for cooling the gaseous material. The water quenching step may include one or more devices suitable for carrying out water quenching.

In one embodiment, the gaseous material is cooled by heat exchanger. In one embodiment, the apparatus comprises at least one heat exchanger for cooling the gaseous material.

The gaseous material is filtered in the gas cleaning step in order to remove solid fraction including radioactive agents. The apparatus comprises at least one filtration device. The filtration is carried out at temperatures between 300 - 500 °C. It is important that the temperature is not too high because, for example, at temperature 600 °C metals may traverse the filtration device. In one embodiment, the filtration device is hot gas filter. In one embodiment the filtration device includes at least one or more ceramic filter. In one embodiment the filtration device includes at least one or more metal filter, preferably sintered metal filter.

In one embodiment, the treated gaseous material is burnt after the removing of the solid fraction including radioactive agents. Preferably, the treated gaseous material is burnt at temperature over 1000 °C. In one embodiment, the apparatus comprises a combustion reactor in which the treated gaseous material is burnt after the removing of the solid fraction including radioactive agents.

In one embodiment, the treated gaseous material or the gas flow of the combustion is post-treated by a gas scrubbing. Preferably, sulphur is removed during the gas scrubbing. In one embodiment, the treated gaseous material may be post-treated by the gas scrubbing directly after the removing of the solid fraction including radioactive agents or alternatively the gas flow may be post-treated by the gas scrubbing after the combustion step which has been done after the removing of the solid fraction including radioactive agents. In one embodiment, the apparatus comprises a gas scrubbing device for post-treating.

In one embodiment sulphur may be removed in connection with the combustion step of the treated gaseous material. However, the sulphur removing is easier to carry out in connection with the gas scrubbing.

In one embodiment, the product gas contains 70 - 100 vol-% treated gaseous material.

In one embodiment, the product gas or the treated gaseous material is used and utilized as a fuel of energy production process. In one embodiment, the product gas or the treated gaseous material is used as a fuel as such or after the gas scrubbing.

The invention provides the advantage that the contaminated waste material can be purified. Thanks to the invention, radioactive fraction can be concentrated and amount of the waste material, and volume of the waste material, can be decreased. By means of the invention even over 90 % volume reduction may be achieved in the amount of the radioactive disposal. The formed radioactive fraction can be disposed as any radioactive waste. Further, by means of the invention gaseous fuel can be produced for energy production process.

The method of the invention offers a possibility to treat contaminated waste material cost-effectively and energy-effectively. The present invention provides an industrially applicable, simple and affordable way of producing treated gaseous material. The method of the present invention is easy and simple to realize as a production process.

### LIST OF FIGURES

In the following section, the invention will be described with the aid of detailed exemplary embodiments, referring to the accompanying figure wherein
Fig. 1 presents one embodiment of an apparatus to perform the method according to the invention, and
Fig. 2 presents another embodiment of an apparatus to perform the method according to the invention.

### DETAILED DESCRIPTION OF THE INVENTION

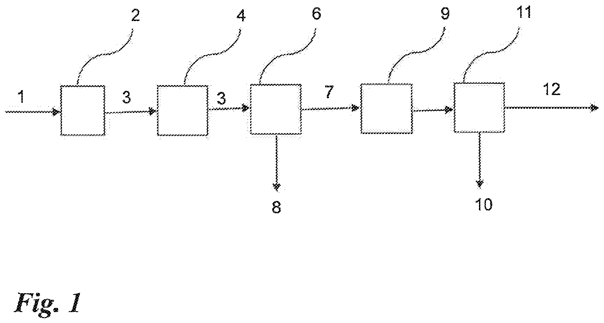

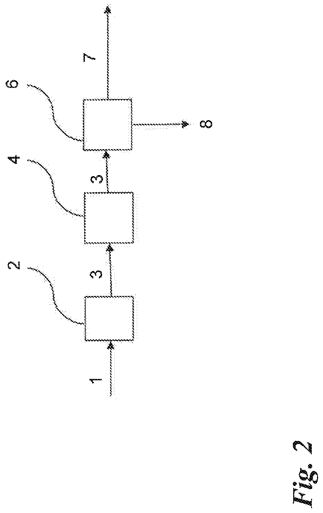

Figures 1 and 2 present apparatuses for treating waste material including organic components and radioactive agents.

### Example 1

The apparatus of figure 1 comprises a fluidized bed reactor 2 in which the waste resin material 1 including organic components and radioactive agents is gasified at temperature between 750 - 950 °C to form a gaseous material 3, a water quenching step 4 in which the gaseous material is cooled so that temperature is between 350 - 450 °C after the cooling, and a metal filtration device 6 in which solid fraction 8 including radioactive agents is removed from the gaseous material 3. The waste resin material 1 may be dewatered before the gasification.

The apparatus comprises a combustion reactor 9 in which the treated gaseous material 7 is burnt at temperature over 1000 °C after the removing of the solid fraction 8 including radioactive agents. Further, the apparatus comprises a gas scrubbing device 11 for post-treating the gas flow after the combustion of the treated gaseous material. Sulphur 10 is removed from the gas flow during the gas scrubbing 11 wherein clean exhaust gas 12 is achieved.

### Example 2

The apparatus of figure 2 comprises a fluidized bed reactor 2 in which the waste material 1 including organic components and radioactive agents is gasified at temperature between 600 - 950 °C to form a gaseous material 3, a heat exchanger 4 in which the gaseous material is cooled so that temperature is between 300 - 500 °C after the cooling, and a metal filtration device 6 in which solid fraction 8 including radioactive agents is removed from the gaseous material 3. In this example the waste material 1 comprises contaminated clothes, wood and vegetable matters.

The treated gaseous material 7 is used directly as a fuel of energy production process. The treated gaseous material may be post-treated by gas scrubbing before the using as a fuel. Alternatively, the treated gaseous material may be burnt in a combustion reactor and/or post-treated by a gas scrubbing.

The devices used in this invention are known per se in the art, and therefore they are not described in any more detail in this context.

The method according to the invention is suitable in different embodiments for treating different kinds of waste material.

## Claims

1. A method for treating waste material including organic components and radioactive agents, wherein the waste material is treated by heat to form a gaseous material, the gaseous material is cooled and the radioactive agents are removed from the gaseous material, **characterized in that** the method comprising steps
- the waste material including organic components and radioactive agents which are low-level and/or medium-level radioactive agents is gasified at temperature between 600 - 950 °C in a fluidized bed reactor and is gasified by air and air ratio is below 1 to form the gaseous material,
- the waste material including organic components and radioactive agents is selected from the group containing resins, such as resins from nuclear powerplant, clothes, such as industrial protective clothing and protective clothing, contaminated wood, contaminated vegetable matter, such as corn, straw and hay,
- the gaseous material is cooled by water quenching so that temperature is between 300 - 500 °C after the cooling,
- solid fraction including radioactive agents is removed from the gaseous material in a gas cleaning step by filtering at temperatures between 300 - 500 °C, in order to form a treated gaseous material, and
- the treated gaseous material is burnt and/or is post-treated by a gas scrubbing after the removing of the solid fraction including radioactive agents.

2. The method according to claim 1, **characterized in that** the gaseous material is combustible.

3. The method according to claim 1 or 2, **characterized in that** the gaseous material is cooled by heat exchanger.

4. The method according to any one of claims 1 to 3, **characterized in that** other organic material is added into the waste material including organic components and radioactive agents before the gasification.

## Patentansprüche

1. Verfahren zur Behandlung von Abfallstoffen einschließlich organischer Bestandteile und radioaktiver Wirkstoffe, wobei die Abfallstoffe durch Wärme behandelt werden, um einen gasförmigen Stoff zu bilden, wobei der gasförmige Stoff gekühlt wird und die radioaktiven Wirkstoffe aus dem gasförmigen Stoff entfernt werden, **dadurch gekennzeichnet, dass** das Verfahren die folgenden Schritte umfasst:
- die Abfallstoffe einschließlich organischer Bestandteile und radioaktiver Wirkstoffe, die schwachradioaktive und/oder mittelradioaktive Wirkstoffe sind, bei einer Temperatur zwischen 600 bis 950°C in einem Fließbettreaktor in Gas umgewandelt werden und durch Luft und einem Luftverhältnis unter 1 in Gas umgewandelt werden, um den gasförmigen Stoff zu bilden,
- die Abfallstoffe einschließlich organischer Bestandteile und radioaktiver Wirkstoffe aus der Gruppe ausgewählt sind, die Harze wie Harze von einem Kernkraftwerk, Gewebe wie industrielle Arbeitsschutzbekleidung und Schutzbekleidung, kontaminiertes Holz, kontaminierte pflanzliche Stoffe wie Getreide, Stroh und Heu enthalten,
- der gasförmige Stoff durch Wasserabschreckung gekühlt wird, so dass die Temperatur nach dem Kühlen zwischen 300 bis 500 °C beträgt,
- ein radioaktive Wirkstoffe enthaltender fester Anteil aus dem gasförmigen Stoff in einem Gasreinigungsschritt durch Filtern bei Temperaturen zwischen 300 bis 500 °C entfernt wird, um einen behandelten gasförmigen Stoff zu bilden, und
- der behandelte gasförmige Stoff verbrannt wird und/oder durch eine Gasreinigung nach der Entfernung des festen Anteils einschließlich radioaktiver Wirkstoffe nachbehandelt wird.

2. Verfahren nach Anspruch 1, **dadurch gekennzeichnet, dass** der gasförmige Stoff brennbar ist.

3. Verfahren nach Anspruch 1 oder 2, **dadurch gekennzeichnet, dass** der gasförmige Stoff durch einen Wärmetauscher gekühlt wird.

4. Verfahren nach einem der Ansprüche 1 bis 3, **dadurch gekennzeichnet, dass** vor der Vergasung ein anderes organisches Material zu den Abfallstoffen einschließlich organischer Bestandteile und radioaktiver Wirkstoffe hinzugefügt wird.

## Revendications

1. Procédé de traitement de déchets comprenant des composants organiques et des agents radioactifs, dans lequel les déchets sont traités par de la chaleur pour former un matériau gazeux, le matériau gazeux est refroidi et les agents radioactifs sont extraits du matériau gazeux, **caractérisé en ce que** le procédé comprend les étapes suivantes :
- les déchets comprenant des composants organiques et des agents radioactifs qui sont des agents radioactifs de faible niveau et/ou de niveau moyen sont gazéifiés à une température comprise entre 600 et 950 °C dans un réacteur à lit fluidisé et sont gazéifiés par de l'air et l'indice d'air se situe en dessous de 1 pour former le matériau gazeux,
- les déchets comprenant des composants organiques et des agents radioactifs sont choisis dans le groupe contenant des résines, telles que des résines provenant d'une centrale nucléaire, des vêtements, tels que des vêtements protecteurs industriels et des vêtements protecteurs, du bois contaminé, des matières végétales contaminées, telles que de la céréale, de la paille et du foin,
- le matériau gazeux est refroidi par trempe à l'eau de sorte que la température se situe entre 300 et 500 °C après le refroidissement,
- une fraction solide comprenant des agents radioactifs est extraite du matériau gazeux dans une étape d'épuration de gaz par filtration à des températures comprises entre 300 et 500 °C afin de former un matériau gazeux traité et
- le matériau gazeux traité est brûlé et/ou post-traité par lavage de gaz après l'extraction de la fraction solide comprenant des agents radioactifs.

2. Procédé selon la revendication 1, **caractérisé en ce que** le matériau gazeux est combustible.

3. Procédé selon la revendication 1 ou 2, **caractérisé en ce que** le matériau gazeux est refroidi par un échangeur de chaleur.

4. Procédé selon l'une quelconque des revendications 1 à 3, **caractérisé en ce qu'**un autre matériau organique est ajouté aux déchets comprenant des composants organiques et des agents radioactifs avant la gazéification.
